# EUROPEAN PATENT APPLICATION

(11) **EP 4 657 836 A1**
(43) Date of publication of application: **03.12.2025**
(21) Application number: 24777491.2
(22) Date of filing: 29.01.2024
(51) Int. Cl.: H04M 1/02

(54) **ELECTRONIC DEVICE, AND CONTROL METHOD THEREFOR AND INFRARED MODULE THEREOF**

(30) Priority: 31.03.2023 CN 202310379735
(71) Applicant: Huawei Technologies Co., Ltd., Shenzhen, Guangdong 518129 (CN)
(72) Inventor: ZHU, Li, Shenzhen, Guangdong 518129 (CN)
(74) Representative: Gill Jennings & Every LLP
(86) International application number: PCT/CN2024/074537
(87) International publication number: WO 2024/198696

(57) **Abstract**

This application provides an electronic device and a control method therefor, and an infrared module, and relates to the field of terminal technologies, to resolve a problem that the infrared module is configured at the top of a body of the electronic device, an emission direction of the infrared module is fixed, a field of view is narrow, and normal use is affected. The electronic device includes a middle frame, a housing, a processor, and the infrared module. The housing is fitted onto the middle frame. The processor and the infrared module are disposed in accommodation space formed by the housing and the middle frame. The housing includes a transparent cover plate, and the infrared module is disposed under the transparent cover plate. In response to a tilt of the electronic device in a pitch direction, the processor is configured to adjust an emergent direction, relative to the transparent cover plate, of an infrared ray emitted by the infrared module.

## Description

This application claims priority to Chinese Patent Application No. 202310379735.9, filed with the China National Intellectual Property Administration on March 31, 2023 and entitled "ELECTRONIC DEVICE AND CONTROL METHOD THEREFOR, AND INFRARED MODULE", which is incorporated herein by reference in its entirety.

### TECHNICAL FIELD

This application relates to the field of terminal technologies, and in particular, to an electronic device and a control method therefor, and an infrared module.

### BACKGROUND

Some electronic devices have a built-in infrared function. The electronic devices can be used to directly control and associate related devices, and the electronic devices are used as remote controls. An infrared module of the electronic device is usually disposed at the top of a body of the electronic device for ease of use. However, because an emission direction of the infrared module is fixed, and space at the top of the electronic device is limited, a hole usually needs to be drilled on a middle frame, and an infrared ray emitted by an infrared emitter is conducted out by using a light guide column. In addition, a size of the hole is limited by space of the body of the electronic device. As a result, an infrared emission field of view (field of view, FOV) is limited, affecting use of the infrared function by a user.

### SUMMARY

Embodiments of this application provide an electronic device and a control method therefor, and an infrared module, to resolve a problem that the infrared module is configured at the top of a body of the electronic device, an emission direction of the infrared module is fixed, a field of view is narrow, and normal use is affected.

To achieve the foregoing objective, the following solutions are used in embodiments of this application.

According to a first aspect, an embodiment of this application provides an electronic device. The electronic device includes a middle frame, a housing, a processor, and an infrared module. The housing is fitted onto the middle frame. The processor and the infrared module are disposed in accommodation space formed by the housing and the middle frame. The housing includes a transparent cover plate, and the infrared module is disposed under the transparent cover plate. This can avoid problems such as a problem that an FOV is limited due to impact of disposing the infrared module at the top of a body of the electronic device, a hole drilled on the middle frame, a light guide column, and the like. The light guide column may not need to be disposed by disposing the infrared module under the transparent cover plate, and an infrared emission FOV is large. In response to a tilt of the electronic device in a pitch direction, the processor is configured to adjust an emergent direction, relative to the transparent cover plate, of an infrared ray emitted by the infrared module. This may further overcome impact of a tilt angle of the electronic device on an emission distance of the infrared ray. For example, when the electronic device is pitched at a specific angle, the emergent direction of the infrared ray may be adjusted to move downwards or downwards, and a problem such as a limited emission distance caused by an upward tilt or a downward tilt of the electronic device may be overcome.

In a possible implementation, the infrared module includes an adjustment apparatus, a first bracket, and an infrared emitter. The infrared emitter is mounted on the first bracket, and the adjustment apparatus is electrically connected to the processor. In response to control of the processor, the adjustment apparatus is configured to adjust the first bracket to be tilted, to change a position of the infrared emitter mounted on the first bracket, to adjust an emergent direction, relative to the transparent cover plate, of an infrared ray emitted by the infrared emitter.

In a possible implementation, the infrared module further includes a second bracket, and the adjustment apparatus includes a first adjustment apparatus. The second bracket includes a base and a support pillar connected to the base. One end that is of the support pillar and that is away from the base is connected to the first bracket. The first adjustment apparatus is disposed on the base, and the first adjustment apparatus is connected to the first bracket. In response to control of the processor, the first adjustment apparatus is configured to drive the first bracket to shift towards a first direction or a second direction, to drive the emergent direction, relative to the transparent cover plate, of the infrared ray emitted by the infrared emitter to shift towards the first direction or the second direction. The first direction is a reverse direction of the pitch direction of the electronic device, and the second direction is a forward direction of the pitch direction of the electronic device. In this way, impact of the upward tilt or the downward tilt of the electronic device on infrared emission can be reduced.

In a possible implementation, the first adjustment apparatus includes a first coil and a first magnetic member. When the first coil is energized, the first magnetic member is attracted or repelled. The first coil is disposed on the base, and the first magnetic member is disposed on the first bracket. Alternatively, the first magnetic member is disposed on the base, and the first coil is disposed on the first bracket. In this way, when the first coil is energized, the first adjustment apparatus may apply an acting force to the first bracket through interaction between the first coil and the first magnetic member, to drive the first bracket to shift towards a first direction or a second direction, thereby driving the emergent direction, relative to the transparent cover plate, of the infrared ray emitted by the infrared emitter to shift towards the first direction or the second direction.

In a possible implementation, the adjustment apparatus further includes an infrared drive circuit. The infrared drive circuit is electrically connected to the processor. The infrared drive circuit includes a first output, and the first output is connected to the first coil. In response to a tilt angle of the electronic device, the processor is configured to control the infrared drive circuit to adjust a current magnitude and/or a current direction of a signal output to the first coil.

In a possible implementation, the adjustment apparatus further includes a second adjustment apparatus. The second adjustment apparatus is disposed on the base, and the second adjustment apparatus is connected to the first bracket. In response to control of the processor, the second adjustment apparatus is configured to drive the first bracket to shift towards the second direction or the first direction, to drive the emergent direction, relative to the transparent cover plate, of the infrared ray emitted by the infrared emitter to shift towards the second direction or the first direction.

In a possible implementation, the first adjustment apparatus and the second adjustment apparatus are located on two sides of the support pillar. Both the first adjustment apparatus and the second adjustment apparatus may adjust the emergent direction, relative to the transparent cover plate, of the infrared ray emitted by the infrared emitter. By disposing the first adjustment apparatus and the second adjustment apparatus, the first adjustment apparatus and the second adjustment apparatus may both run independently, or may run together, which may improve reliability of the infrared module of the electronic device.

In a possible implementation, the second adjustment apparatus includes a second coil and a second magnetic member. When the second coil is energized, the second magnetic member is attracted or repelled. The second coil is disposed on the base, and the second magnetic member is disposed on the first bracket. Alternatively, the second magnetic member is disposed on the base, and the second coil is disposed on the first bracket.

In a possible implementation, the infrared drive circuit further includes a second output. The second output is connected to the second coil. The processor is configured to control, based on a pitch angle, the infrared drive circuit to adjust a current magnitude or a current direction of the signal output to the second coil.

In a possible implementation, the electronic device further includes a camera module. The camera module is disposed under the transparent cover plate. The transparent cover plate includes a first region and a second region. The camera module is aligned with the first region, and the infrared module is aligned with the second region. The infrared module is disposed near the camera module, so that internal space of the electronic device can be saved.

In a possible implementation, the electronic device further includes a sensor. The sensor is connected to the processor, and the sensor is configured to detect the tilt of the electronic device.

According to a second aspect, an embodiment of this application provides an infrared module. The infrared module includes a first bracket, a second bracket, a first adjustment apparatus, and an infrared emitter. The infrared emitter is mounted on the first bracket. The second bracket includes a base and a support pillar connected to the base. One end that is of the support pillar and that is away from the base is connected to the first bracket. The first adjustment apparatus includes a first magnetic member and a first coil. The first coil is disposed on the base, and the first magnetic member is disposed on the first bracket. Alternatively, the first magnetic member is disposed on the base, and the first coil is disposed on the first bracket. When the first coil is energized, the first magnetic member is attracted or repelled. The first bracket is driven to shift towards a first direction or a second direction, to drive an emergent direction of an infrared ray emitted by the infrared emitter to shift towards the first direction or the second direction. The second direction is opposite to the first direction.

The infrared module provided in this embodiment of this application includes the first adjustment apparatus. The first adjustment apparatus may drive the first bracket to shift towards the first direction or the second direction, to drive an emission direction of the infrared emitter mounted on the first bracket to shift towards the first direction or the second direction. In this way, a better field of view of the infrared ray can be obtained by adjusting the emission direction. Interaction between an energized coil and a magnetic member is used to drive the second bracket to drive the emergent direction of the infrared ray emitted by the infrared emitter to change. In this way, a better field of view can be obtained. In addition, a combination of the energized coil and the magnetic member occupies small space, which is conducive to a miniaturization design of the infrared module.

In a possible implementation, the infrared module further includes a second adjustment apparatus. The second adjustment apparatus includes a second magnetic member and a second coil. The second coil is disposed on the base, and the second magnetic member is disposed on the first bracket. Alternatively, the second magnetic member is disposed on the base, and the second coil is disposed on the first bracket. When the second coil is energized, the second magnetic member is attracted or repelled. The second bracket is driven to shift towards the second direction or the first direction, to drive the emergent direction of the infrared ray emitted by the infrared emitter to shift towards the first direction or the second direction. The emission direction of the infrared emitter is adjusted through a joint action of the first adjustment apparatus and the second adjustment apparatus. Compared with driving by a single adjustment apparatus, this can improve stability. In addition, even if one adjustment apparatus is faulty, the other adjustment apparatus can still drive adjustment of the emergent direction of the infrared ray emitted by the infrared emitter, which improves reliability.

In a possible implementation, the first adjustment apparatus and the second adjustment apparatus are distributed on two sides of the support pillar.

In a possible implementation, the second bracket is movably connected to the support pillar.

In a possible implementation, the second bracket is rotatably connected to the support pillar.

According to a third aspect, an embodiment of this application further provides a control method for an electronic device. The electronic device includes a middle frame, a housing, a processor, and an infrared module. The housing is fitted onto the middle frame. The processor and the infrared module are disposed in accommodation space formed by the housing and the middle frame. The housing includes a transparent cover plate, and the infrared module is disposed under the transparent cover plate. The method includes: detecting a tilt of the electronic device in a pitch direction; and in response to the tilt of the electronic device in the pitch direction, adjusting an emergent direction, relative to the transparent cover plate, of an infrared ray emitted by the infrared module.

In a possible implementation, the infrared module includes a first bracket, a second bracket, a first adjustment apparatus, and an infrared emitter. The infrared emitter is mounted on the first bracket. The second bracket includes a base and a support pillar connected to the base. One end that is of the support pillar and that is away from the base is connected to the first bracket. The first adjustment apparatus includes a first coil and a first magnetic member. The first coil is disposed on the base, and the first magnetic member is disposed on the first bracket. Alternatively, the first magnetic member is disposed on the base, and the first coil is disposed on the first bracket. In response to the tilt of the electronic device in the pitch direction, the adjusting an emergent direction, relative to the transparent cover plate, of an infrared ray emitted by the infrared module includes: in response to the tilt of the electronic device, adjusting a magnitude and/or a direction of a current output to the first coil.

According to a fourth aspect, an embodiment of this application further provides a storage medium. The storage medium stores a computer program, and when the computer program is executed by a processor, steps of the method provided in any implementation of the third aspect are implemented.

### BRIEF DESCRIPTION OF DRAWINGS

FIG. 1A is a diagram of an electronic device according to an embodiment of this application;
FIG. 1B is a diagram of an infrared module according to an embodiment of this application;
FIG. 2 is a diagram of controlling a controlled object by an electronic device according to an embodiment of this application;
FIG. 3 is a diagram of an electronic device according to an embodiment of this application;
FIG. 4 is another diagram of an electronic device according to an embodiment of this application;
FIG. 5 is a diagram of another electronic device according to an embodiment of this application;
FIG. 6 is a diagram of a use scenario of an electronic device;
FIG. 7 is a diagram of a coordinate system diagram of an electronic device;
FIG. 8 is a diagram of emitting an infrared ray by an electronic device in a posture;
FIG. 9 is a diagram of emitting an infrared ray by an electronic device in another posture;
FIG. 10 is a diagram of adjusting an emission direction of an infrared ray according to an embodiment of this application;
FIG. 11 is a diagram of an infrared module according to an embodiment of this application;
FIG. 12 is a diagram of a working scenario of an infrared module according to an embodiment of this application;
FIG. 13 is a diagram of a working state of an infrared module according to an embodiment of this application;
FIG. 14 is a diagram of another working state of an infrared module according to an embodiment of this application;
FIG. 15 is a diagram of another infrared module according to an embodiment of this application;
FIG. 16 is a diagram of another infrared module according to an embodiment of this application;
FIG. 17 is a diagram of generating a magnetic field by an energized coil;
FIG. 18A is a diagram of an electronic device according to an embodiment of this application;
FIG. 18B is a diagram of another electronic device according to an embodiment of this application;
FIG. 19 is a diagram of a control system of an infrared module according to an embodiment of this application;
FIG. 20 is a schematic flowchart of a control method for an electronic device according to an embodiment of this application; and
FIG. 21 is a diagram of another working scenario of an infrared module according to an embodiment of this application.

### DESCRIPTION OF EMBODIMENTS

The following describes the technical solutions in embodiments of this application with reference to the accompanying drawings in embodiments of this application. It is clear that the described embodiments are merely some embodiments rather than all of embodiments of this application.

The terms such as "first" and "second", below are merely for convenience of description, and are not to be construed as indicating or implying relative importance or implicitly indicating a quantity of indicated technical features. Therefore, a feature limited by "first", "second", or the like may explicitly or implicitly include one or more features. In the descriptions of this application, unless otherwise stated, "a plurality of" means two or more than two. For example, a plurality of processing units means two or more processing units.

In addition, in embodiments of this application, "up", "down", "left", and "right" are not limited to definitions relative to directions in which components are schematically placed in the accompanying drawings. It should be understood that these directional terms may be relative concepts used for relative description and clarification, and may change correspondingly according to a change of a direction in which a component in the accompanying drawings is placed. In the accompanying drawings, for clarity, thicknesses of layers and regions are exaggerated, and a size proportion relationship between parts in the figures does not reflect an actual size proportion relationship.

In embodiments of this application, unless otherwise explicitly specified and limited, the term "connection" should be understood in a broad sense. For example, the "connection" may be a fixed connection, a detachable connection, or an integrated connection. Alternatively, the "connection" may be a direct connection or an indirect connection through an intermediate medium. In addition, the term "electrical connection" may be a direct electrical connection or an indirect electrical connection through an intermediate medium.

In embodiments of this application, the term "module" is usually a functional structure obtained through logical division. The "module" may be implemented by only hardware, or may be implemented by a combination of software and hardware. In embodiments of this application, the term "and/or" describes an association relationship between associated objects and indicates that three relationships may exist. For example, "A and/or B" may indicate the following three cases: Only A exists, only B exists, and both A and B exist.

In embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a relative concept in a specific manner.

An infrared (infrared) ray, also referred to as infrared, is an electromagnetic wave that is between visible light and a microwave and that is in an infrared band with a wavelength ranging from 0.76 to 1000 micrometers. The infrared ray is a widely used electromagnetic wave, and is widely used in fields such as security surveillance, medical care, and wireless control.

For example, an infrared function is set for an electronic device such as a smartphone, and may be used to sense a call status of a user. For example, when the user picks up a mobile phone to answer a call, the infrared function detects that the mobile phone is close to an ear, and a screen of the mobile phone may be turned off, to avoid an accidental touch. Alternatively, the infrared ray may be further used to sense an external environment. Usually, the top or the bottom of a mobile phone is disposed with an infrared sensor for monitoring ambient luminance, so that luminance, a color, and the like that are displayed on a screen of the mobile phone can be adjusted based on the ambient luminance.

In addition to being used for monitoring, the infrared ray may also be used to transmit data, control associated devices, for example, devices like a television and an air conditioner that support infrared control, and the like. If some mobile phones have a built-in infrared function, the mobile phones may be used to directly control and associate these devices, and the mobile phones are used as remote controls.

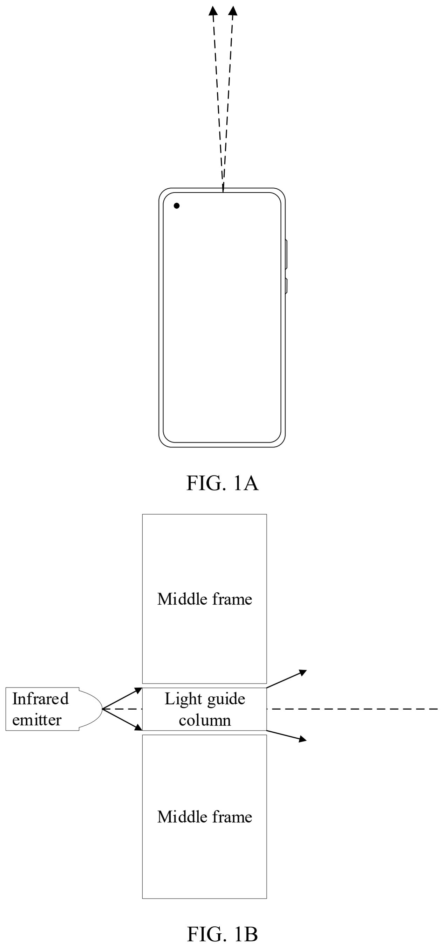

Same as the remote controls, an infrared module of the electronic device such as a mobile phone is usually disposed at the top of a body of the electronic device for ease of use, as shown in FIG. 1A. However, because space at the top of the electronic device such as a mobile phone is limited, a hole usually needs to be drilled on a middle frame, and with reference to FIG. 1B, an infrared ray emitted by an infrared emitter is conducted out by using a light guide column. In addition, a size of the hole is limited by space of the body of the electronic device, and the size of the hole is usually about 1.6 mm. As a result, an infrared emission field of view (field of view, FOV) is limited, affecting use of the infrared function by a user.

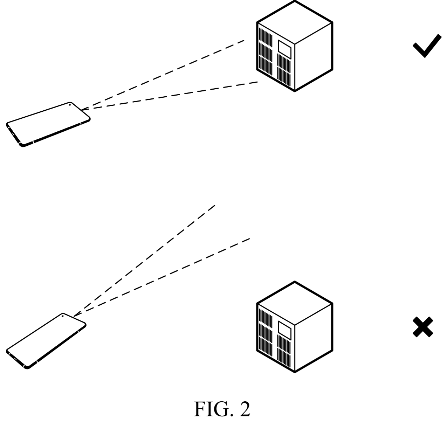

Because the infrared ray cannot pass through an obstacle like the remote control to control a controlled object, when the controlled object is controlled by using the infrared ray, the infrared emitter usually needs to be aligned with the controlled object. However, when an object at a long distance is controlled, the infrared emitter cannot be aligned with the controlled object due to a narrow FOV. As shown in FIG. 2, when the user uses the electronic device, if the infrared emitter cannot be aligned with the controlled object due to a change of an angle at which the user holds the electronic device, the controlled object may not be controlled, affecting user experience.

Herein, the FOV of the infrared ray emitted by the infrared emitter is limited because of limitations such as the light guide column and the size of the hole drilled on the middle frame. The infrared ray emitted by the infrared emitter can be conducted only by using the light guide column disposed in the hole on the middle frame. Because the hole on the middle frame is small, a width (diameter) of the light guide column is limited. Consequently, the FOV of the infrared ray emitted by the infrared emitter is limited.

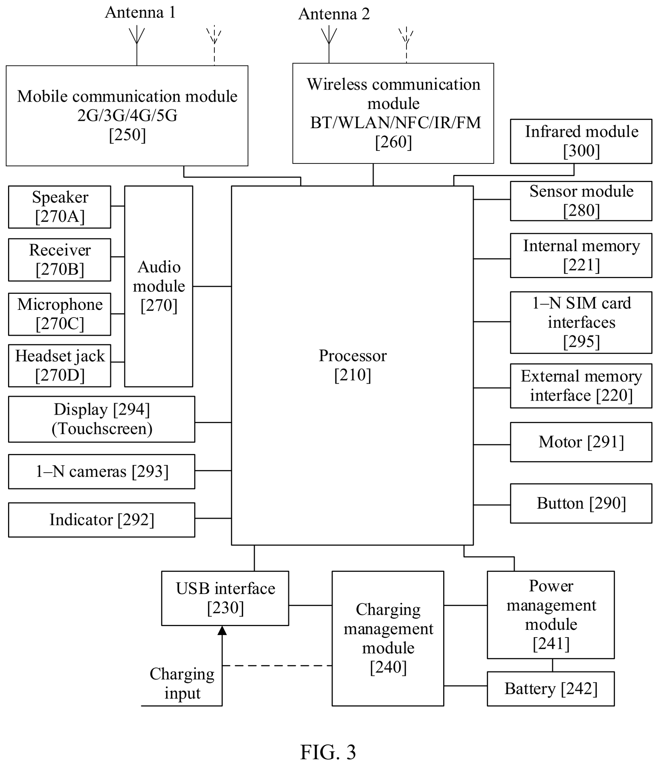

Therefore, an embodiment of this application provides a solution for improving an FOV of an infrared ray, applied to an electronic device like an electronic device such as a mobile phone or a tablet computer. The following uses an example in which the electronic device is the mobile phone for description. FIG. 3 is a diagram of a structure of the electronic device according to an embodiment of this application.

With reference to FIG. 3, the electronic device may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor 280, a button 290, a motor 291, an indicator 292, a camera 293, a display 294, a subscriber identity module (subscriber identity module, SIM) card interface 295, and the like.

The sensor 280 may include a sensor such as pressure sensor, a gyroscope sensor, a gravity sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

It may be understood that the structure shown in this embodiment does not constitute a specific limitation on the electronic device. In some other embodiments, the electronic device may include more or fewer components than those shown in the figure, or may combine some components, or may split some components, or may have different component arrangements. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device. The controller may generate an operation control signal based on an instruction operation code and a time sequence signal, to complete control of instruction reading and instruction execution.

The memory may be further disposed in the processor 210, and is configured to store instructions and data. In some embodiments, the memory in the processor 210 is a cache. The memory may store instructions or data that has been used or cyclically used by the processor 210. If the processor 210 needs to use the instructions or the data again, the processor may directly invoke the instructions or the data from the memory. This avoids repeated access and reduces waiting time of the processor 210, thereby improving system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment is merely used as an example for description, and does not constitute a limitation on the structure of the electronic device. In some other embodiments, the electronic device may alternatively use an interface connection manner different from that in the foregoing embodiment, or use a combination of a plurality of interface connection manners.

The charging management module 240 is configured to receive charging input from a charger. The charger may be a wireless charger or a wired charger. The charging management module 240 supplies power to the electronic device by using the power management module 241 while charging the battery 242.

The power management module 241 is configured to connect the battery 242, the charging management module 240, and the processor 210. The power management module 241 receives an input from the battery 242 and/or an input from the charging management module 240, and supplies power to the processor 210, the internal memory 221, an external memory, the display 294, the camera 293, the wireless communication module 260, and the like. In some embodiments, the power management module 241 and the charging management module 240 may be alternatively disposed in a same device.

A wireless communication function of the electronic device may be implemented by using the antenna 1, the antenna 2, the mobile communication module 250, the wireless communication module 260, the modem processor, the baseband processor, and the like. In some embodiments, in the electronic device, the antenna 1 and the mobile communication module 250 are coupled, and the antenna 2 and the wireless communication module 260 are coupled, so that the electronic device can communicate with a network and another device by using a wireless communication technology.

The antenna 1 and the antenna 2 are configured to transmit and receive an electromagnetic wave signal. Each antenna in the electronic device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 250 may provide a solution to wireless communication such as 2G/3G/4G/5G applicable to the electronic device. The mobile communication module 250 may include at least one filter, a switch, a power amplifier, a low noise amplifier (low noise amplifier, LNA), and the like. The mobile communication module 250 may receive an electromagnetic wave by using the antenna 1, perform processing such as filtering or amplification on the received electromagnetic wave, and transmit the electromagnetic wave to the modem processor for demodulation.

The mobile communication module 250 may further amplify a signal modulated by the modem processor, and convert the signal into an electromagnetic wave for radiation by using the antenna 1. In some embodiments, at least some function modules in the mobile communication module 250 may be disposed in the processor 210. In some embodiments, at least some function modules in the mobile communication module 250 may be disposed in a same device as at least some modules in the processor 210.

The wireless communication module 260 may provide a wireless communication solution that is applied to the electronic device and that includes a WLAN (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

The wireless communication module 260 may be one or more devices integrating at least one communication processing module. The wireless communication module 260 receives an electromagnetic wave by using the antenna 2, performs frequency modulation and filtering processing on the electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation by using the antenna 2.

The electronic device implements a display function by using the GPU, the display 294, the application processor, and the like. The GPU is a microprocessor for image processing, and is connected to the display 294 and the application processor. The GPU is configured to perform mathematical and geometric computation for graphic rendering. The processor 210 may include one or more GPUs that execute program instructions to generate or change display information.

The display 294 is configured to display an image, a video, and the like. The display 294 includes a display panel.

The electronic device may implement a photographing function by using the ISP, the camera 293, the video codec, the GPU, the display 294, the application processor, and the like. The ISP is configured to process data fed back by the camera 293. The camera 293 is configured to capture a static image or a video. In some embodiments, the electronic device may include one or N cameras 293, where N is a positive integer greater than 1.

The external memory interface 220 may be configured to connect to an external storage card, for example, a microSD card, to extend a storage capability of the electronic device. The external memory card communicates with the processor 210 through the external memory interface 220, to implement a data storage function. For example, files such as music and videos are stored in the external storage card.

The internal memory 221 may be configured to store computer-executable program code, and the executable program code includes instructions. The processor 210 runs the instructions stored in the internal memory 221, to perform various function applications and data processing of the electronic device. For example, in this embodiment of this application, the processor 210 may execute the instructions stored in the internal memory 221, and the internal memory 221 may include a program storage area and a data storage area.

The program storage area may store an operating system, an application program (for example, a sound playing function or an image playing function) required by at least one function, and the like. The data storage area may store data (for example, audio data or an address book) and the like created when the electronic device is used. In addition, the internal memory 221 may include a high-speed random access memory, or may include a nonvolatile memory, for example, at least one magnetic disk storage device, a flash memory, or a universal flash storage (universal flash storage, UFS).

The electronic device may implement an audio function such as music playing and recording by using the audio module 270, the speaker 270A, the receiver 270B, the microphone 270C, the headset jack 270D, the application processor, and the like.

The button 290 includes a power button, a volume button, and the like. The button 290 may be a mechanical button, or may be a touch button. The motor 291 may generate a vibration prompt. The motor 291 may be configured to provide an incoming call vibration prompt, or may be configured to provide a touch vibration feedback. The indicator 292 may be an indicator light, and may be configured to indicate a charging status and a power change, or may be configured to indicate a message, a missed call, a notification, and the like. The SIM card interface 295 is configured to connect to a SIM card. The SIM card may be inserted into the SIM card interface 295 or removed from the SIM card interface 295, to implement contact with and separation from the electronic device. The electronic device may support one or N SIM card interfaces, where N is a positive integer greater than 1. The SIM card interface 295 may support a nano-SIM card, a micro-SIM card, a SIM card, and the like.

The electronic device further includes an infrared module 300. The infrared module 300 may include an infrared emitter and an infrared receiver. The infrared emitter is configured to emit an infrared ray, and the infrared receiver is configured to receive the infrared ray.

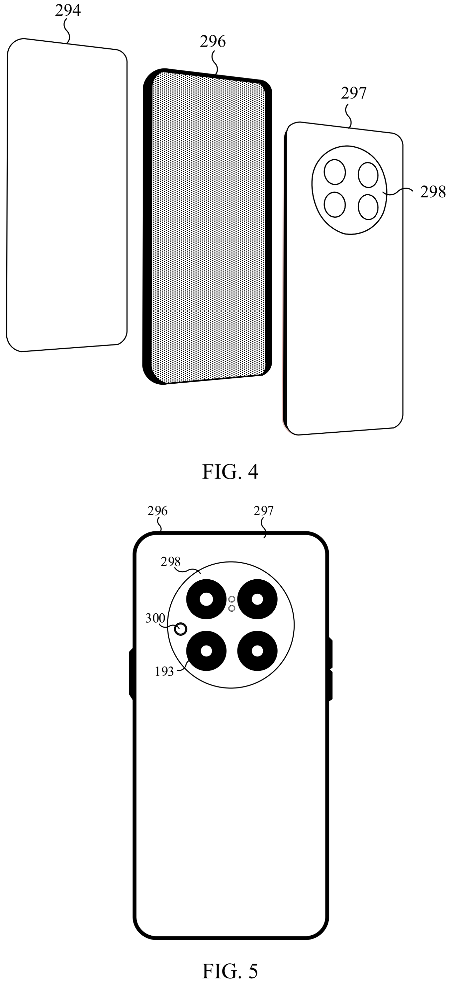

The electronic device further includes a middle frame 296 and a housing 297 shown in FIG. 4. The display 294 and the housing 297 are respectively located on two sides of the middle frame 296. A rear surface of the display 294 faces the housing 297. The display 294 and the housing 297 may be connected through the middle frame 296. The electronic device further includes a mainboard. The processor 210, the external memory interface 220, the internal memory 221, the universal serial bus (universal serial bus, USB) interface 230, the charging management module 240, the power management module 241, the battery 242, the camera 293, and other devices or functional modules are disposed on the mainboard. The mainboard is disposed in accommodation space formed by the middle frame 296, the display 294, and the housing 297. The housing 297 includes a transparent cover plate 298. The camera 293, the infrared module 300, and the like are disposed under the transparent cover plate 298.

If the infrared module is disposed on the top of the electronic device, due to a space limitation, a hole needs to be drilled on the middle frame, and an infrared ray is emitted outwards through a light guide column. Therefore, an FOV for guiding the infrared ray is narrow. In the solution provided in this embodiment of this application, the infrared module 300 is disposed under the transparent cover plate 298, no hole needs to be drilled, and blocking is reduced. In addition, the infrared ray can be emitted outwards through the transparent cover plate 298, and a power loss caused when the light guide column conducts the infrared ray can also be avoided.

For example, with reference to FIG. 5, a housing 297 may be fitted onto a middle frame 296. The housing 297 includes a transparent cover plate 298. A camera module 193 and the infrared module 300 of the electronic device are disposed under the transparent cover plate 298, or are disposed in space formed between the transparent cover plate 298 and the middle frame 296.

The infrared module 300 is disposed under the transparent cover plate 298, so that an infrared ray emitted by the infrared module 300 can be diverged outwards through the transparent cover plate 298. Because an area of the transparent cover plate 298 is far greater than that of the infrared module 300 and that of the camera module 193, and the transparent cover plate 298 can transmit a light ray, the infrared module 300 is disposed under the transparent cover plate 298, and there is no blocking. This avoids the problem, in the foregoing solution, that the FOV of the infrared ray emitted by the infrared module 300 is limited due to the light guide column and a hole drilled on the middle frame. Therefore, when the infrared function of the electronic device is used, user experience is not affected due to the limited FOV of the infrared ray.

In a possible implementation, the transparent cover plate 298 includes a first region 2981 and a second region 2982. The camera module 193 is aligned with the first region 2981, and the infrared module 300 is aligned with the second region 2982. The second region 2982 may be coated with an infrared ink layer. The infrared ink layer may transmit only an infrared ray while a light ray of another wavelength is filtered out.

The transparent cover plate 298 may be a transparent decorative cover plate of the camera module 193, and is also referred to as a decorative film (Decorative Film, DECO film for short). The DECO film may be made of a material such as an organic material or tempered glass. Disposing the infrared module 300 under the DECO film of the camera module 193 can save internal space of the electronic device. To prevent a light ray of the infrared module 300 and a light ray of the camera module 193 from affecting each other, foam may be disposed between the infrared module 300 and the second region 2982, to avoid infrared ray leakage.

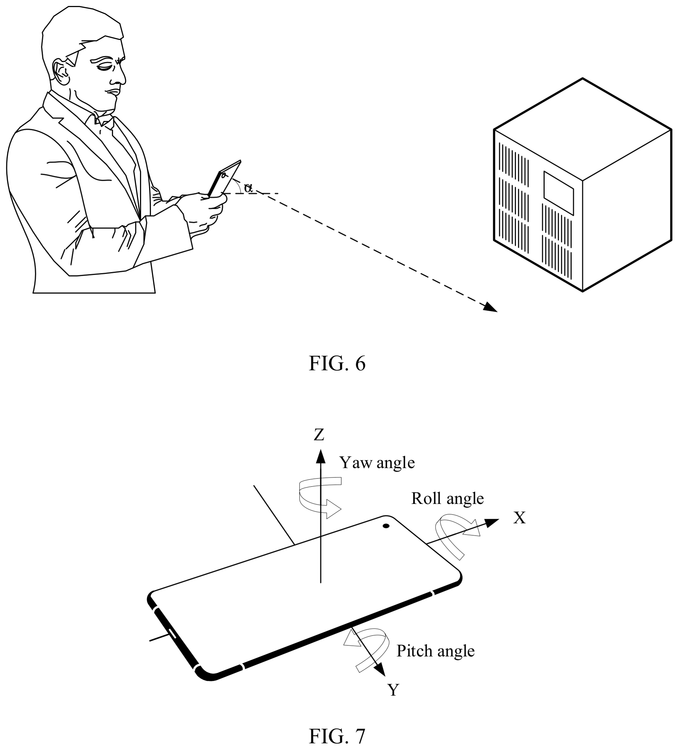

Disposing the infrared module 300 under the transparent cover plate 298 may increase the FOV of the infrared ray of the electronic device. However, due to a use habit of the user, with reference to FIG. 6, when the user uses the electronic device, a body of the electronic device usually does not present a horizontal or vertical state, but presents a specific tilt angle, to help the user to browse content displayed on the display 294.

With reference to FIG. 7, if the electronic device is placed in an XYZ inertial coordinate system, a Z axis is perpendicular to the display of the electronic device and is upward, an X axis is parallel to, on a reference plane of the body of the electronic device, an axis of the body of the electronic device and points to the front of the electronic device, and a Y axis is perpendicular to, on the reference plane of the body of the electronic device, the X axis and points to the right of the electronic device. An angle at which the electronic device rotates around the X axis is referred to as a roll (roll) angle, an angle at which the electronic device rotates around the Y axis is referred to as a pitch (pitch) angle, and an angle at which the electronic device rotates around the Z axis is referred to as a yaw (yaw) angle.

When the infrared module 300 of the electronic device is disposed under the transparent cover plate on the housing of the electronic device, an FOV center line of the infrared ray is perpendicular to a plane on which the housing is located. When the electronic device presents a specific tilt angle, a range that the infrared ray emitted by the infrared module of the electronic device reaches is affected, or in other words, control of a controlled object at a long distance is affected.

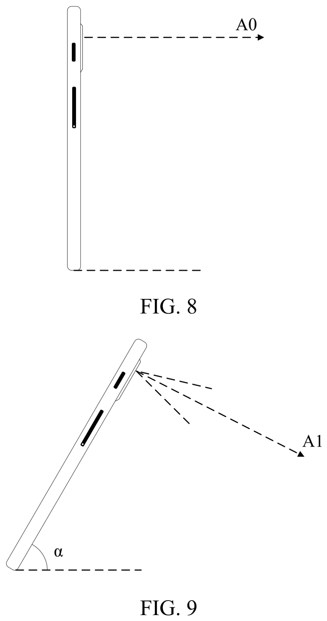

For example, with reference to FIG. 8 and FIG. 9, when the plane on which the housing 297 of the electronic device is located is perpendicular to a horizontal plane, and an emission direction (a direction A0 shown in FIG. 8) of the infrared ray is in a horizontal direction, a distance that the infrared ray can reach in the horizontal direction is the longest, and the controlled object at a long distance can be controlled. However, when the electronic device presents the specific tilt angle, for example, when the pitch angle is α, because the housing 297 of the electronic device obliquely faces the horizontal plane, and the emission direction (a direction A1 shown in FIG. 9) of the infrared ray is perpendicular to the plane on which the housing 297 is located, a center direction in which the infrared module 300 emits the infrared ray also shifts downwards, and a distance that the infrared ray can reach in the horizontal direction is shortened. As a result, the infrared ray may not be aligned with the controlled object at a long distance.

With reference to FIG. 8 and FIG. 9, it can be learned that to maximize an emission distance of the infrared ray in the horizontal direction, the infrared ray needs to be emitted in the horizontal direction. However, in this case, the electronic device needs to be kept in a state of being perpendicular to the horizontal plane. This does not conform to the use habit of the user. When the infrared module 300 is disposed under the transparent cover plate 298 of the housing 297, and the infrared function of a terminal is used, the distance that the infrared ray can reach in the horizontal direction is greatly affected by the pitch angle of the electronic device. Due to the use habit of the user, the electronic device usually presents a specific pitch angle when the user uses the electronic device, and the distance that the infrared ray can reach in the horizontal direction may be shortened through the pitch angle. Therefore, when using the infrared function of the electronic device, the user may need to adjust a posture of the electronic device, so that the infrared ray can reach a longer distance in the horizontal direction, and a better control range can be obtained when the infrared ray is used to control a controlled object.

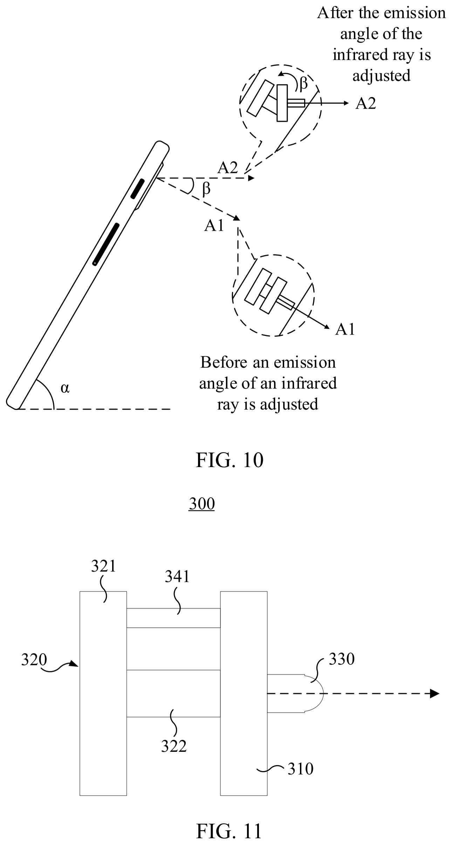

Therefore, an embodiment of this application provides a solution, so that an emission angle of the infrared ray can be adjusted based on the pitch angle of the electronic device. For example, as shown in FIG. 10, when the electronic device presents the specific pitch angle, and the plane of the housing 297 is obliquely downward, the emission direction of the infrared ray is also obliquely downward (for example, a direction A1 in FIG. 10). The emission angle of the infrared ray may be adjusted for the electronic device provided in this embodiment of this application, so that impact of the pitch angle of the electronic device can be overcome through the emission angle of the infrared ray, and the infrared ray is still kept in a state of being emitted in the horizontal direction or close to the horizontal direction (for example, a direction A2 in FIG. 10). In this way, the infrared ray can control a controlled object at a longer distance.

For example, an embodiment of this application provides an infrared module 300, so that an emission angle of an infrared ray can be adjusted. FIG. 11 is a diagram of a structure of the infrared module 300 according to an embodiment of this application. The infrared module 300 includes a first bracket 310, a second bracket 320, an infrared emitter 330, and an adjustment apparatus.

The second bracket 320 includes a base 321 and a support pillar 322 connected to the base 321. One end that is of the support pillar 322 and that is away from the base 321 is connected to the first bracket 310. The infrared emitter 330 is mounted on the first bracket 310, and the infrared emitter 330 may emit an infrared ray towards a side that is away from the second bracket 320. The adjustment apparatus includes a first adjustment apparatus 341. The first adjustment apparatus 341 is disposed on the base 321, and the first adjustment apparatus 341 is connected to the first bracket 310. The first adjustment apparatus 341 is configured to drive the first bracket 310 to shift or rotate towards a first direction or a second direction, to drive an emergent direction of the infrared ray emitted by the infrared emitter 330 mounted on the first bracket 310 to shift or rotate towards the first direction or the second direction. For example, the first direction may refer to a counterclockwise direction around the Y axis in the XYZ coordinate system, and the second direction may refer to a clockwise direction around the Y axis in the XYZ coordinate system. When the electronic device rotates around the Y axis, and a pitch angle is generated, an emission direction in which the infrared emitter 330 of the infrared module 300 emits the infrared ray may also rotate around the Y axis by a specific angle, to avoid impact of a posture of the electronic device on an infrared function.

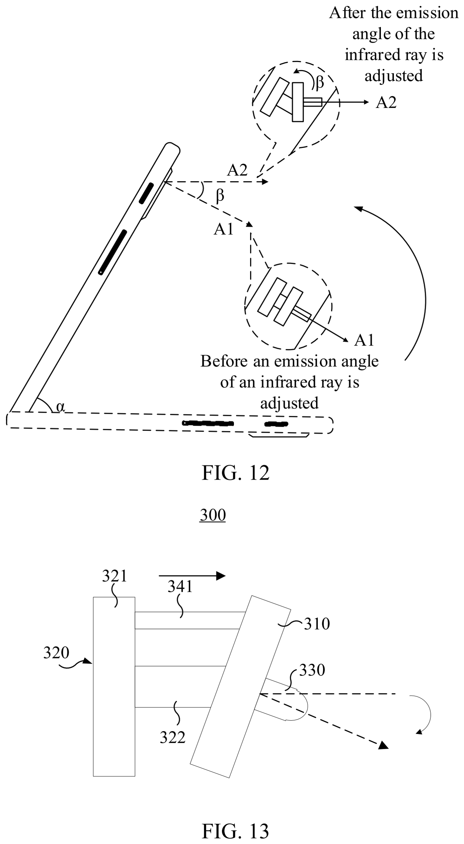

For example, with reference to FIG. 12, when the electronic device rotates clockwise around the Y axis (that is, towards the first direction) by an angle β in a vertical state, that is, in a state of being perpendicular to a horizontal plane (the pitch angle is 90°), the pitch angle is α, and α+β=90°. If the emission direction of the infrared ray is not adjusted, the emergent direction of the infrared ray is obliquely downward in a direction in which an angle between the emergent direction of the infrared ray and the horizontal plane is β. In this way, a distance that the infrared ray can reach is shortened. The electronic device provided in this embodiment of this application may adjust the emergent direction of the infrared ray. For example, the emergent direction of the infrared ray rotates counterclockwise around the Y axis (that is, towards the second direction) by the angle β. In this way, the emergent direction of the infrared ray may be restored to be in a horizontal direction, and a distance that the infrared ray emitted in the horizontal direction can reach is longer than a distance that the infrared ray emitted in the obliquely downward direction can reach, so that a range of effectively controlling a controlled device by the electronic device by using the infrared ray can be increased.

For example, with reference to FIG. 13, when the first adjustment apparatus 341 applies an acting force to the first bracket 310 in a direction away from the second bracket 320, the first bracket 310 shifts or rotates towards the first direction (that is, the clockwise direction around the Y axis). In this case, the emergent direction in which the infrared emitter 330 emits the infrared ray also shifts or rotates along with the first bracket 310 towards the first direction.

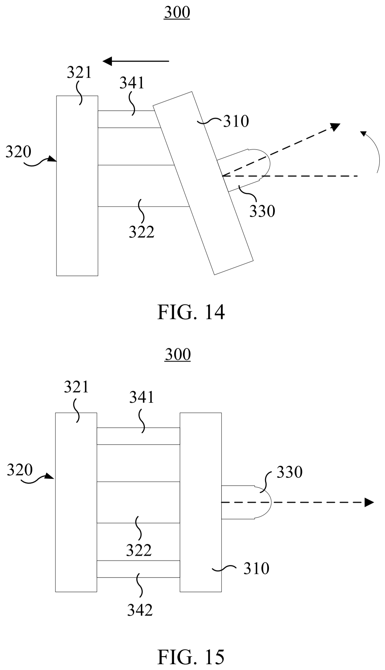

For example, with reference to FIG. 14, when the first adjustment apparatus 341 applies an acting force to the first bracket 310 in a direction towards the second bracket 320, the first bracket 310 shifts or rotates towards the second direction (that is, the counterclockwise direction around the Y axis). In this case, the emergent direction in which the infrared emitter 330 emits the infrared ray also shifts or rotates along with the first bracket 310 towards the second direction.

In a possible implementation, the first bracket 310 is movably connected to the support pillar 322, so that the first adjustment apparatus 341 can drive the first bracket 310 to shift towards the first direction or the second direction.

Alternatively, the first bracket 310 may be rotatably connected to the support pillar 322, so that the first adjustment apparatus 341 can drive the first bracket 310 to rotate in the first direction or the second direction. For example, the first bracket 310 may be connected to the support pillar 322 by using a shaft, a ball head, or the like.

Certainly, the first bracket 310 may alternatively be fastened to the support pillar 322. In this case, the support pillar 322 may be made of an elastic material. In this way, when the first adjustment apparatus 341 applies an acting force to the first bracket 310, the support pillar 322 can be elastically deformed, so that the first bracket 310 shifts or rotates towards the first direction or the second direction.

For example, in a possible implementation, with reference to FIG. 15, the adjustment apparatus may further include a second adjustment apparatus 342. The second adjustment apparatus 342 and the first adjustment apparatus 341 are distributed on two sides of the support pillar 322. The second adjustment apparatus 342 is disposed on the base 321 of the second bracket 320, and the second adjustment apparatus 342 is connected to the first bracket 310.

A structure and a principle of the second adjustment apparatus 342 are the same as those of the first adjustment apparatus 341. The second adjustment apparatus 342 may also apply the acting force to the first bracket 310 in the direction away from the second bracket 320 or the acting force in the direction towards the second bracket 320, to drive the first bracket 310 to shift or rotate towards the second direction or the first direction.

In a possible implementation, both the first adjustment apparatus 341 and the second adjustment apparatus 342 include two working states: applying the acting force to the first bracket 310 in the direction close to the second bracket 320 or applying the acting force to the first bracket 310 in the direction away from the second bracket 320.

For example, when the first adjustment apparatus 341 applies the acting force to the first bracket 310 in the direction close to the second bracket 320, the first bracket 310 shifts or rotates towards the second direction; or when the first adjustment apparatus 341 applies the acting force to the first bracket 310 in the direction away from the second bracket 320, the first bracket 310 shifts or rotates towards the first direction.

Because the second adjustment apparatus 342 and the first adjustment apparatus 341 are distributed on the two sides of the support pillar 322, the acting forces that are applied by the second adjustment apparatus 342 and the first adjustment apparatus 341 to the first bracket 310 in a same direction produce opposite effect.

For example, when the second adjustment apparatus 342 applies the acting force to the first bracket 310 in the direction close to the second bracket 320, the first bracket 310 shifts or rotates towards the first direction; or when the second adjustment apparatus 342 applies the acting force to the first bracket 310 in the direction away from the second bracket 320, the first bracket 310 shifts or rotates towards the second direction.

In this case, when shifting or rotating in the first direction or the second direction, the first bracket 310 is simultaneously driven by the first adjustment apparatus 341 and the second adjustment apparatus 342, and shifts or rotates under a joint action of the first adjustment apparatus 341 and the second adjustment apparatus 342.

In the foregoing examples, the first adjustment apparatus 341 may apply, to the first bracket 310, the acting force in the direction towards the second bracket 320 or the acting force in the direction away from the second bracket 320, and the second adjustment apparatus 342 may apply, to the first bracket 310, the acting force in the direction away from the second bracket 320 or the acting force in the direction towards the second bracket 320. This means that the first adjustment apparatus 341 and the second adjustment apparatus 342 may independently drive the first bracket 310 to rotate or shift towards the first direction or the second direction, to drive the emission direction in which the infrared emitter 330 emits the infrared ray to shift or rotate. When either the first adjustment apparatus 341 or the second adjustment apparatus 342 is faulty, the other one may drive the first bracket 310 to rotate or shift towards the first direction or the second direction, to drive the emission angle at which the infrared emitter 330 emits the infrared ray to shift or rotate.

Alternatively, in some other possible examples, the first adjustment apparatus 341 and the second adjustment apparatus 342 may separately apply the acting force to the first bracket 310 in only one direction. For example, the first adjustment apparatus 341 applies the acting force to the first bracket 310 in the direction towards the second bracket 320, and the second adjustment apparatus 342 applies the acting force to the first bracket 310 in the direction away from the second bracket 320. Alternatively, the first adjustment apparatus 341 applies the acting force to the first bracket 310 in the direction away from the second bracket 320, and the second adjustment apparatus 342 applies the acting force to the first bracket 310 in the direction towards the second bracket 320. In this case, the first adjustment apparatus 341 and the second adjustment apparatus 342 may separately drive the first bracket 310 to rotate only towards the first direction or the second direction. The first bracket 310 can rotate or shift towards different directions only under a joint action of the first adjustment apparatus 341 and the second adjustment apparatus 342. The first adjustment apparatus 341 and the second adjustment apparatus 342 are configured to drive the first bracket 310 to shift or rotate, to drive the emission direction in which the infrared emitter 330 mounted on the first bracket 310 emits the infrared ray to shift or rotate.

For example, in a possible implementation, the first adjustment apparatus 341 and the second adjustment apparatus 342 may be telescopic rods. The telescopic rod may include a fastening part and a movable part. The fastening part is mounted on the base 321 of the second bracket 320. One end of the movable part is connected to the fastening part, the other end of the movable part is connected to the first bracket 310, and the movable part may extend and retract. When the movable part extends, the action force in the direction away from the second bracket 320 is applied to the first bracket 310. When the movable part retracts, the acting force in the direction towards the second bracket 320 is applied to the first bracket 310.

Alternatively, in another possible implementation, the first adjustment apparatus 341 and the second adjustment apparatus 342 may be voice coil motors or drive motors having a same function. The voice coil motor or the drive motor is connected to the first bracket 310 through a transmission mechanism. When the voice coil motor or the drive motor rotates in a forward direction, the acting force in the direction away from the second bracket 320 is applied to the first bracket 310 through the transmission mechanism, and when the voice coil motor or the drive motor rotates in a reverse direction, the acting force in the direction towards the second bracket 320 is applied to the first bracket 310 through the transmission mechanism, to drive the first bracket 310 to shift or rotate towards the first direction or the second direction, and drive the emission direction of the infrared emitter 330 to rotate towards the first direction or the second direction.

However, space of the electronic device is limited, and the telescopic rods, the voice coil motors, and the like that are used as the first adjustment apparatus 341 and the second adjustment apparatus 342 occupy large space, and costs are high. Therefore, this embodiment of this application provides another implementation, so that the space occupied by the first adjustment apparatus 341 and the second adjustment apparatus 342 can be reduced, and costs can be further reduced.

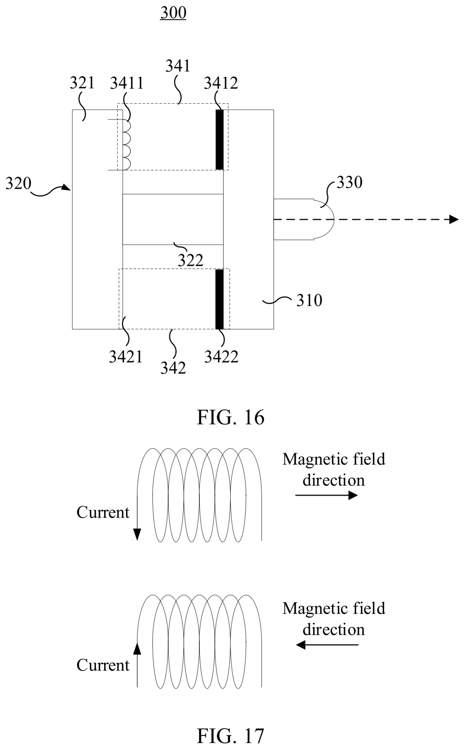

For example, with reference to FIG. 16, the first adjustment apparatus 341 is used as an example. The first adjustment apparatus 341 includes a first coil 3411 and a first magnetic member 3412. When a current flows through the first coil 3411, a magnetic field is generated, to attract the first magnetic member 3412. Either the first coil 3411 or the first magnetic member 3412 may be disposed on the second bracket 320, and the other one may be disposed on the first bracket 310. For example, the first coil 3411 is disposed on the base 321 of the second bracket 320, and the first magnetic member 3412 may be mounted at a corresponding position on the first bracket 310, so that the first coil 3411 and the first magnetic member 3412 may be disposed opposite to each other. In this way, when the first coil 3411 is energized, the first magnetic member 3412 may be attracted. The first magnetic member 3412 is mounted on the first bracket 310. Therefore, when the first magnetic member 3412 is attracted by the first coil 3411, the first magnetic member 3412 may apply the acting force to the first bracket 310 in the direction towards the second bracket 320, to drive the first bracket 310 to shift or rotate towards the first direction, and drive the emission direction of the infrared emitter 330 to also rotate towards the first direction.

Alternatively, the first coil 3411 is disposed on the base 321 of the second bracket 320, and the first magnetic member 3412 is mounted at a corresponding position on the first bracket 310, so that the first coil 3411 and the first magnetic member 3412 may be disposed opposite to each other. In this way, when the first coil 3411 is energized, the first magnetic member 3412 may be attracted. The first magnetic member 3412 is fastened to the second bracket 320. Therefore, a reacting force of the first magnetic member 3412 to the first coil 3411 may drive the first bracket 310 to shift or rotate towards the first direction, to drive the emission direction of the infrared emitter 330 to also rotate towards the first direction.

It can be learned from the foregoing content that the coil may be disposed on the second bracket 320, and the magnetic member is disposed on the first bracket 310, or the coil may be disposed on the first bracket 310, and the magnetic member is disposed on the second bracket 320. For ease of description, in subsequent examples of this application, an example in which the coil is disposed on the second bracket 320 and the magnetic member is disposed on the first bracket 310 is used.

The first adjustment apparatus 341 is still used as an example. The first magnetic member 3412 may be an iron sheet and is disposed through fastening on a side that is of the first bracket 310 and that faces the second bracket 320. Alternatively, the first magnetic member 3412 may be a sheet structure made of a ferromagnetic material such as iron, steel, nickel, or cobalt.

A structure of the second adjustment apparatus 342 is the same as that of the first adjustment apparatus 341. The second adjustment apparatus 342 includes a second coil 3421 and a second magnetic member 3422. The second coil 3421 is disposed on the base 321 of the second bracket 320, and the second magnetic member 3422 is disposed on the first bracket 310. When a current flows through the second coil 3421, a magnetic field is generated, to attract the second magnetic member 3422, and drive the first bracket 310 to rotate towards the second direction. In this way, the emission direction of the infrared emitter 330 is driven to shift or rotate towards the second direction.

For example, the first adjustment apparatus 341 and/or the second adjustment apparatus 342 drive/drives the first bracket 310 to shift or rotate because of a force between an energized coil and a magnetic member. According to a right-hand spiral rule, a larger current flowing through the energized coil and a larger quantity of coil turns indicate a stronger magnetic field. Therefore, the first adjustment apparatus 341 and/or the second adjustment apparatus 342 may adjust, by adjusting a current magnitude of the coil, a magnitude of the acting force applied to the first bracket 310.

Acting forces F applied by the first adjustment apparatus 341 and the second adjustment apparatus 342 to the first bracket 310 satisfy: F=BIL. B represents strength of the magnetic field. After quantities of winding turns of the first coil 3411 and the second coil 3421 are fixed, B is determined based on strength of the currents flowing through the coils. I represents strength of an induced current on the magnetic member. L represents a length of a conductor in the magnetic field. The first coil 3411 is used as an example. A larger current flowing through the first coil 3411 indicates higher strength of the magnetic field generated, and a larger induced current I generated on the magnetic member. Therefore, an electromagnetic force F is also larger, and a force for attracting the magnetic member is larger.

In some possible implementations, iron cores may be further inserted into the first coil 3411 and the second coil 3421. After the iron cores are inserted, strength of magnetic fields generated when the first coil 3411 and the second coil 3421 are energized can be enhanced.

In addition, refer to FIG. 17. According to a right-hand spiral rule, a direction in which the magnetic field is generated by the energized coil is related to a current direction. If the current flowing through the coil is in a reverse direction, the direction in which the magnetic field is generated also changes towards the reverse direction.

Therefore, with reference to the foregoing examples, both the first adjustment apparatus 341 and the second adjustment apparatus 342 may apply, to the first bracket 310, the acting force in the direction close to the second bracket 320 or the direction away from the second bracket 320. In this case, this may be implemented by changing current directions of the first coil 3411 and the second coil 3421 and adjusting current magnitudes.

In a possible implementation, the first adjustment apparatus 341 may apply the acting force to the first bracket 310 only towards the direction close to the second bracket 320, and the second adjustment apparatus 342 may apply the acting force to the first bracket 310 only towards the direction away from the second bracket 320. Alternatively, the first adjustment apparatus 341 may apply the acting force to the first bracket 310 only towards the direction away from the second bracket 320, and the second adjustment apparatus 342 may apply the acting force to the first bracket 310 only towards the direction close to the second bracket 320. In this case, this may be implemented by changing the current magnitudes of the first coil 3411 and the second coil 3421. For example, if the magnitude of the current flowing through the first coil 3411 is large, and the magnitude of the current flowing through the second coil 3421 is small, or is 0, the acting force applied by the first adjustment apparatus 341 is large, and the first bracket 310 shifts or rotates towards the first direction under the acting force applied by the first adjustment apparatus 341. On the contrary, if the magnitude of the current flowing through the second coil 3421 is large, and the magnitude of the current flowing through the first coil 3411 is small, or is 0, the acting force applied by the second adjustment apparatus 342 is large, and the first bracket 310 shifts or rotates towards the second direction under the acting force applied by the second adjustment apparatus 342.

Based on the infrared module 300 provided in the foregoing examples, when the user uses the electronic device, the direction in which the infrared module 300 emits the infrared ray may change. In this way, impact of the posture of the electronic device on an effective range of the infrared function of the electronic device can be reduced.

For example, an infrared drive circuit may be disposed on the mainboard of the electronic device. The infrared drive circuit includes a first output P1 and a second output P2. The first output P1 is electrically connected to the first coil 3411, and the second output P2 is electrically connected to the second coil 3421.

The processor 210 of the electronic device may control the infrared drive circuit to adjust directions and magnitudes of currents output to the first coil 3411 and the second coil 3421, to change the emission angle of the infrared ray.

With reference to the foregoing examples, impact of a posture change of the electronic device on the infrared function of a user clock is mainly reflected in that the distance that the infrared ray reaches is shortened due to the pitch angle of the electronic device. Especially, when the pitch angle of the electronic device is positive, and a rear cover of the electronic device obliquely faces the ground, the emission angle of the infrared ray also faces the ground. As a result, the infrared ray cannot reach a controlled object at a long distance.

In the solution provided in this embodiment of this application, the infrared module 300 may be disposed under the transparent cover plate 298 of a cover plate of the electronic device, and the emission angle of the infrared emitter 330 may be deflected under driving of the first adjustment apparatus 341 and the second adjustment apparatus 342. Because the infrared module is mainly affected by the pitch angle of the electronic device, the first adjustment apparatus 341 and the second adjustment apparatus 342 adjust the infrared emitter 330, mainly to cancel or reduce the impact of the pitch angle of the electronic device on the emission angle of the infrared emitter 330.

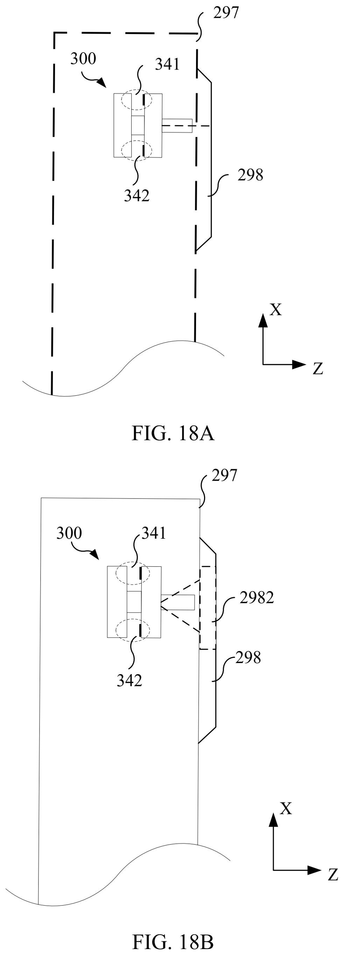

For example, in a possible implementation, with reference to FIG. 18A, a connection line between the first adjustment apparatus 341 and the second adjustment apparatus 342 is parallel to an axis of the body of the electronic device, or is parallel to the X axis mentioned in the foregoing examples. Therefore, when the first adjustment apparatus 341 and the second adjustment apparatus 342 apply the acting force to the first bracket 310, the first bracket 310 may rotate or shift towards the first direction (clockwise direction around the Y axis), or the first bracket 310 may rotate or shift towards the second direction (counterclockwise direction around the Y axis), to drive the infrared emitter 330 to rotate. In this way, the emission direction of the infrared ray may also rotate or shift in the second direction or the first direction, the emission direction of the infrared ray is kept in the horizontal direction or close to the horizontal direction, and the impact of the pitch angle of the electronic device on the emission direction of the infrared emitter 330 and a distance that the infrared emitter 330 reaches can be canceled or reduced.

In a possible implementation, the adjustment apparatus further includes an infrared drive circuit 343. The processor 210 may control, according to an instruction of the user, the infrared drive circuit 343 to adjust the magnitudes or the directions of the currents flowing through the first coil 3411 and the second coil 3421, to drive the emergent direction in which the infrared module 300 emits the infrared ray to shift or rotate.

For example, the electronic device includes a touchscreen, and in response to a touch operation performed by the user on the touchscreen, the processor 210 may control the infrared drive circuit 343 to adjust the directions, the magnitudes, and the like of the currents output to the first coil 3411 and the second coil 3421, to drive the emission angle at which the infrared module 300 emits the infrared ray to shift or rotate.

Alternatively, the electronic device includes a physical button, a knob, and the like, and in response to an operation performed by the user on the physical button, the knob, and the like, the processor 210 may control the infrared drive circuit 343 to adjust the directions, the magnitudes, and the like of the currents output to the first coil 3411 and the second coil 3421, to drive the emission angle at which the infrared module 300 emits the infrared ray to shift or rotate.

Alternatively, the electronic device includes a voice control module, and in response to a voice control instruction delivered by the user, the processor 210 may control the infrared drive circuit 343 to adjust the directions, the magnitudes, and the like of the currents output to the first coil 3411 and the second coil 3421, to drive the emission angle at which the infrared module 300 emits the infrared ray to shift or rotate.

For example, in the electronic device provided in this embodiment of this application, the infrared module 300 is disposed under the transparent cover plate, and the infrared module 300 is aligned with a second region of the transparent cover plate, to expand the FOV of the infrared ray emitted by the infrared module 300. Because the emergent direction in which the infrared module 300 emits the infrared ray may move in the first direction and the second direction, it may be understood that with reference to FIG. 18B, a size of a second region 2982 of the transparent cover plate 298 should ensure that the infrared ray is still not blocked even when the emergent direction of the infrared ray emitted by the infrared module 300 reaches extreme ranges of the first direction and the second direction.

In the foregoing examples, the emission direction in which the infrared ray emitted by the infrared module 300 can be adjusted, and the impact of the posture of the electronic device on the distance that the infrared ray reaches and an effective range of the infrared ray can be overcome. However, for the user, a process of using the infrared ray function by the user is more complex, and the user delivers an instruction to adjust the emission direction of the infrared ray. This increases difficulty in using the infrared ray function by the user, and there may be a case in which a controlled object cannot be aligned after a plurality of times of adjustment, that is, an adjustment direction is incorrect or adjustment is not properly performed. As a result, user experience is affected.

Therefore, the electronic device provided in this embodiment of this application may automatically adjust the emission direction of the infrared ray of the infrared module 300 based on the pitch angle of the electronic device. For example, the sensor 280 of the electronic device includes a plurality of sensors such as a gyroscope, a gravity sensor, and an acceleration sensor, and may be configured to detect posture data of the electronic device, for example, posture data such as a tilt angle. The processor 210 may determine the pitch angle of the electronic device based on data detected by the sensor 280, determine, based on the pitch angle of the electronic device, an angle that needs to be adjusted for the emission direction in which the infrared module 300 emits the infrared ray, and control the infrared drive circuit 343 to adjust the magnitudes of the currents output to the first coil 3411 and the second coil 3421, to adjust the emergent direction of the infrared ray.

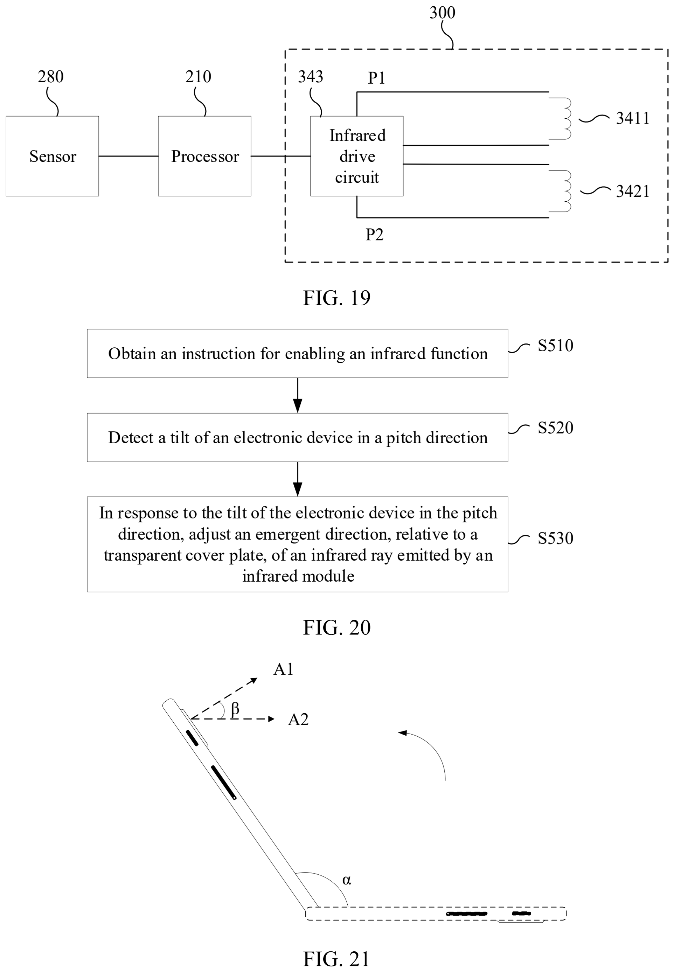

For example, FIG. 19 is a diagram of a control system of an infrared module 300 according to an embodiment of this application. The control system includes a processor 210, an infrared drive circuit 343, a first coil 3411, a second coil 3421, and a sensor 280.

The sensor 280 is connected to the processor 210. The sensor 280 may include a gyroscope, a gravity sensor, an acceleration sensor, and the like. Posture data detected by the sensor 280 is sent to the processor 210, and the processor 210 may determine a pitch angle of an electronic device based on the posture data detected by the sensor.

The processor 210 is connected to the infrared drive circuit 343, and the infrared drive circuit 343 includes a first output P1 and a second output P2. The first output P1 is connected to the first coil 3411, and the second output P2 is connected to the second coil 3421.

The processor 210 sends a control signal to the infrared drive circuit 343 based on the pitch angle of the electronic device, to control the infrared drive circuit 343 to adjust magnitudes of signals output by the first output P1 and the second output P2, and further control an emission angle at which the infrared module 300 emits an infrared ray.

For example, FIG. 20 is a schematic flowchart of a control method for an infrared module according to an embodiment of this application. The method includes the following steps.

S510: Obtain an instruction for enabling an infrared.

S520: Detect a tilt of an electronic device in a pitch direction.

The tilt of the electronic device is detected when a user enables the infrared function of the electronic device. For example, a sensor disposed in the electronic device may be configured to detect a tilt state of the electronic device.

S530: In response to the tilt of the electronic device in the pitch direction, adjust an emergent direction, relative to a transparent cover plate, of an infrared ray emitted by the infrared module.

For example, when the emergent direction, relative to the transparent cover plate, of the infrared ray emitted by the infrared module is not adjusted, the emergent direction of the infrared ray is perpendicular to the transparent cover plate, and the infrared ray is emitted outwards. When the electronic device tilts, the emergent direction of the infrared ray also changes with the tilt of the electronic device. For example, when the electronic device tilts downwards, the emergent direction of the infrared ray also tilts downwards. When the electronic device tilts upwards, the emergent direction of the infrared ray also tilts upwards. Both upward and downward tilts shorten a distance that the infrared ray can reach, affecting a control range of the infrared ray. In the solution provided in this embodiment of this application, in response to the tilt of the electronic device, the emergent direction, relative to the transparent cover plate, of the infrared ray emitted by the infrared module is adjusted. For example, when the electronic device tilts downwards, the emergent direction, relative to the transparent cover plate, of the infrared ray is adjusted upwards, to ensure that the infrared ray can be emitted in a horizontal direction as much as possible, and the control range is large.

For example, when a posture of the electronic device changes, for example, a specific pitch angle is presented, an emission direction of the infrared module also changes, for example, from being emitted in the horizontal direction to being emitted in an obliquely upward direction or being emitted in an obliquely downward direction. Consequently, the distance that the infrared arrival may reach is shortened, and an effective control range is narrowed. To overcome impact of the pitch angle of the electronic device on the emission direction of the infrared module, the emission direction of the infrared module needs to be adjusted, to enable the infrared ray to be emitted in the horizontal direction or in a direction close to the horizontal direction.

For example, with reference to FIG. 12, when the pitch angle of the electronic device is α, and α<90°, before the emission direction is adjusted (as shown in a direction A1 in the figure), an included angle between the emission direction of the infrared module and a horizontal plane is -β (positive above the horizontal plane, and negative under the horizontal plane), and α+β=90°. Therefore, the emission direction of the infrared module needs to be rotated by an angle β in a counterclockwise direction around a Y axis, that is, the second direction mentioned in the foregoing examples.

For example, when the pitch angle of the electronic device is α, and α=90°, a housing plane of the electronic device is perpendicular to the horizontal plane, and the emission direction in which the infrared module emits the infrared ray is in the horizontal direction. Therefore, the emission direction does not need to be adjusted.

For example, with reference to FIG. 21, when the pitch angle of the electronic device is α, and 180°>α>90°, before the emission direction is adjusted (as shown in a direction A1 in the figure), an included angle between the emission direction of the infrared module and a horizontal plane is β (positive above the horizontal plane, and negative under the horizontal plane), and α-β=90°. Therefore, the emission direction of the infrared module needs to be rotated by an angle β in a clockwise direction around a Y axis, that is, the first direction mentioned in the foregoing examples.

The pitch angle from 0° to 90° may correspond to a posture in which the user stands or sits and uses the electronic device, and the pitch angle from 90° to 180° may correspond to a posture in which the user lies and uses the electronic device. When the pitch angle is less than 0° or greater than 180°, adjustment may be correspondingly performed according to the solution described in the foregoing examples.

For example, in response to the tilt of the electronic device in the pitch direction, a processor may control an infrared drive circuit to adjust a current magnitude and/or a current direction of a coil, to adjust the emergent direction in which the infrared module emits the infrared ray. After an angle adjustment amount is determined, the processor controls the infrared drive circuit to adjust current magnitudes and/or current directions of a first coil and a second coil, to adjust the emission direction of the infrared module by the foregoing angle adjustment amount.

After the emission direction of the infrared module is adjusted by the foregoing angle adjustment amount, the emission direction of the infrared module reaches a target position, the infrared function is enabled, and the infrared ray is emitted in the horizontal direction or in the direction close to the horizontal direction, so that a longer control distance can be obtained.

For example, in a process in which the user uses the infrared function, the pitch angle of the electronic device may further change. Therefore, in the process in which the user uses the infrared function, the user may also adjust the emission direction of the infrared module in real time, and is not limited to adjusting the emission direction when the infrared function is enabled.

In the foregoing examples, only impact of the pitch angle on the infrared function is mentioned. Therefore, a first adjustment apparatus and a second adjustment apparatus may adjust an infrared emission direction to shift or rotate in the first direction (clockwise around the Y axis) or the second direction (counterclockwise around the Y axis). In some other possible cases, a yaw angle, a roll angle, and the like of the electronic device may also affect the infrared function. In this case, a plurality of adjustment apparatuses may be further disposed, so that the emission direction of the infrared ray can be adjusted in a direction of the roll angle or the yaw angle of the electronic device.

The method steps described with reference to the content disclosed in this application may be implemented in a hardware manner, or may be implemented in a manner of executing a software instruction by a processor. The software instructions may include a corresponding software module. The software module may be stored in a random access memory (random access memory, RAM), a flash memory, an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communications medium, where the communications medium includes any medium that enables a computer program to be transmitted from one place to another. The storage medium may be any available medium accessible to a general-purpose or a dedicated computer.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An electronic device, wherein the electronic device comprises a middle frame, a housing, a processor, and an infrared module, the housing is fitted onto the middle frame, the processor and the infrared module are disposed in accommodation space formed by the housing and the middle frame, the housing comprises a transparent cover plate, and the infrared module is disposed under the transparent cover plate; and
in response to a tilt of the electronic device in a pitch direction, the processor is configured to adjust an emergent direction, relative to the transparent cover plate, of an infrared ray emitted by the infrared module.

2. The electronic device according to claim 1, wherein the infrared module comprises an adjustment apparatus, a first bracket, and an infrared emitter, the infrared emitter is mounted on the first bracket, and the adjustment apparatus is electrically connected to the processor; and
in response to control of the processor, the adjustment apparatus is configured to adjust the first bracket to be tilted, to adjust an emergent direction, relative to the transparent cover plate, of an infrared ray emitted by the infrared emitter.

3. The electronic device according to claim 2, wherein the infrared module further comprises a second bracket, and the adjustment apparatus comprises a first adjustment apparatus;
the second bracket comprises a base and a support pillar connected to the base, one end that is of the support pillar and that is away from the base is connected to the first bracket, the first adjustment apparatus is disposed on the base, and the first adjustment apparatus is connected to the first bracket;
in response to control of the processor, the first adjustment apparatus is configured to drive the first bracket to shift towards a first direction or a second direction, to drive the emergent direction, relative to the transparent cover plate, of the infrared ray emitted by the infrared emitter to shift towards the first direction or the second direction; and
the first direction is a reverse direction of the pitch direction of the electronic device, and the second direction is a forward direction of the pitch direction of the electronic device.

4. The electronic device according to claim 3, wherein the first adjustment apparatus comprises a first coil and a first magnetic member, and when the first coil is energized, the first magnetic member is attracted or repelled, wherein
the first coil is disposed on the base, and the first magnetic member is disposed on the first bracket; or
the first magnetic member is disposed on the base, and the first coil is disposed on the first bracket.

5. The electronic device according to claim 4, wherein the adjustment apparatus further comprises an infrared drive circuit, the infrared drive circuit is electrically connected to the processor, the infrared drive circuit comprises a first output, the first output is connected to the first coil, and in response to a tilt angle of the electronic device, the processor is configured to control the infrared drive circuit to adjust a current magnitude and/or a current direction of a signal output to the first coil.

6. The electronic device according to claim 5, wherein the adjustment apparatus further comprises a second adjustment apparatus, the second adjustment apparatus is disposed on the base, the second adjustment apparatus is connected to the first bracket, and in response to control of the processor, the second adjustment apparatus is configured to drive the first bracket to shift towards the second direction or the first direction, to drive the emergent direction, relative to the transparent cover plate, of the infrared ray emitted by the infrared emitter to shift towards the second direction or the first direction.

7. The electronic device according to claim 6, wherein the first adjustment apparatus and the second adjustment apparatus are located on two sides of the support pillar.

8. The electronic device according to claim 6 or 7, wherein the second adjustment apparatus comprises a second coil and a second magnetic member, and when the second coil is energized, the second magnetic member is attracted or repelled, wherein
the second coil is disposed on the base, and the second magnetic member is disposed on the first bracket; or
the second magnetic member is disposed on the base, and the second coil is disposed on the first bracket.

9. The electronic device according to claim 8, wherein the infrared drive circuit further comprises a second output, the second output is connected to the second coil, and in response to the tilt angle of the electronic device, the processor is configured to control the infrared drive circuit to adjust the current magnitude and/or the current direction of the signal output to the first coil.

10. The electronic device according to any one of claims 1 to 9, wherein the electronic device further comprises a camera module, and the camera module is disposed under the transparent cover plate; and
the transparent cover plate comprises a first region and a second region, the camera module is aligned with the first region, and the infrared module is aligned with the second region.

11. The electronic device according to any one of claims 1 to 10, wherein the electronic device further comprises a sensor, the sensor is connected to the processor, and the sensor is configured to detect the tilt of the electronic device.

12. An infrared module, wherein the infrared module comprises a first bracket, a second bracket, a first adjustment apparatus, and an infrared emitter;
the infrared emitter is mounted on the first bracket, the second bracket comprises a base and a support pillar connected to the base, and one end that is of the support pillar and that is away from the base is connected to the first bracket;
the first adjustment apparatus comprises a first magnetic member and a first coil, wherein the first coil is disposed on the base, and the first magnetic member is disposed on the first bracket; or the first magnetic member is disposed on the base, and the first coil is disposed on the first bracket; and
when the first coil is energized, the first magnetic member is attracted or repelled, and the first bracket is driven to shift towards a first direction or a second direction, to drive an emergent direction of an infrared ray emitted by the infrared emitter to shift towards the first direction or the second direction, wherein the second direction is opposite to the first direction.

13. The infrared module according to claim 12, wherein the infrared module further comprises a second adjustment apparatus;
the second adjustment apparatus comprises a second magnetic member and a second coil, wherein the second coil is disposed on the base, and the second magnetic member is disposed on the first bracket; or the second magnetic member is disposed on the base, and the second coil is disposed on the first bracket; and
when the second coil is energized, the second magnetic member is attracted or repelled, and the second bracket is driven to shift towards the second direction or the first direction, to drive the emergent direction of the infrared ray emitted by the infrared emitter to shift towards the first direction or the second direction.

14. The infrared module according to claim 13, wherein the first adjustment apparatus and the second adjustment apparatus are distributed on two sides of the support pillar.

15. The infrared module according to any one of claims 12 to 14, wherein the second bracket is movably connected to the support pillar.

16. The infrared module according to any one of claims 12 to 15, wherein the second bracket is rotatably connected to the support pillar.

17. A control method for an electronic device, wherein the electronic device comprises a middle frame, a housing, a processor, and an infrared module, the housing is fitted onto the middle frame, the processor and the infrared module are disposed in accommodation space formed by the housing and the middle frame, the housing comprises a transparent cover plate, and the infrared module is disposed under the transparent cover plate; and the method comprises:
detecting a tilt of the electronic device in a pitch direction; and
in response to the tilt of the electronic device in the pitch direction, adjusting a sensor in an emergent direction, relative to the transparent cover plate, of an infrared ray emitted by the infrared module.

18. The control method according to claim 17, wherein the infrared module comprises a first bracket, a second bracket, a first adjustment apparatus, and an infrared emitter; the infrared emitter is mounted on the first bracket, the second bracket comprises a base and a support pillar connected to the base, and one end that is of the support pillar and that is away from the base is connected to the first bracket; the first adjustment apparatus comprises a first coil and a first magnetic member, wherein the first coil is disposed on the base, and the first magnetic member is disposed on the first bracket; or the first magnetic member is disposed on the base, and the first coil is disposed on the first bracket; and in response to the tilt of the electronic device, the adjusting an emergent direction, relative to the transparent cover plate, of an infrared ray emitted by the infrared module comprises:
in response to the tilt of the electronic device in the pitch direction, adjusting a magnitude and/or a direction of a current output to the first coil.

19. A storage medium, wherein the storage medium stores a computer program, and when the computer program is executed by a processor, steps of the method according to claim 17 or 18 are implemented.
